# EUROPEAN PATENT SPECIFICATION

(11) **EP 4 112 925 B1**
(45) Date of publication and mention of the grant of the patent: **19.02.2025**
(21) Application number: 22382604.1
(22) Date of filing: 28.06.2022
(51) Int. Cl.: F03D 3/00, F03D 3/06, F03D 3/04

(54) **HORIZONTAL-AXIS WIND-POWERED GENERATOR**
WINDKRAFTGENERATOR MIT HORIZONTALER ACHSE
GÉNÉRATRICE ÉOLIENNE À AXE HORIZONTAL

(30) Priority: 29.06.2021 ES 202130608
(43) Date of publication of application: 04.01.2023
(73) Proprietor: Garcia Martinez, Victoriano, 15401 Ferrol-a Coruña (ES)
(72) Inventor: Garcia Martinez, Victoriano, 15401 Ferrol-a Coruña (ES)
(74) Representative: Urizar Villate, Ignacio

(56) References cited:
- WO-A1-2010/118509
- WO-A1-2017/144837
- US-A- 1 333 987
- US-A- 5 009 569
- US-A1- 2005 201 855
- US-A1- 2009 081 020
- US-A1- 2010 329 841

## Description

### Technical field

The present invention is comprised in the sector for the production of renewable electric power of wind origin for a diverse power consumption market.

The objective of this invention relates to an onshore or offshore wind turbine-type machine for the production of electric power. More specifically, it relates to a multidirectional horizontal-axis wind-powered generator which is transverse to the wind path and presents a high power output, whereby the objective of energy self-sufficiency is proposed for industrial areas, agricultural areas, or urban areas, whether for community housings or single-family housings, given that the key objective of the invention relates to the development, industrialization, and marketing of turbines with different power ranges which are capable of producing electric power from low wind speeds rated as C1 or lower. The location of these turbines will allow consumers themselves to access these turbines, as a community or independently, in order to produce and consume their own electric power or to market the output given that, on the basis of its operating principle, it allows designing machines which can be installed in urban and industrial areas without the residents perceiving any risk of visual or sound impact.

### State of the art

The blades of current horizontal-axis wind turbines which are not perpendicular to the wind path and have one, two, three, or more blades describe the aerial occupation of a circular space known as swept area; in the most common and developed case, the three-blade turbine only effectively uses at most 38% of said circular area for power supply. In the case of vertical-axis wind turbines, the surface they occupy in the wind path is generally square or rectangle shaped and only effectively uses at most 45% of the physically and visually occupied aerial space for power supply; furthermore, their power supply system has a low efficiency given that the high-revolution centrifugal action prevents the supply of power or the entry of wind into the turbine, and the discharge system is poorly developed given that the same centrifugal action allows the exit of turbulent wind through any point with a lower pressure, without providing energy favorable for rotor propulsion.

In general, the possibility of supplying power with the kinetic energy of the entire aerial space being occupied or the swept area is not utilized in current vertical-axis and horizontal-axis turbine designs.

The low individual yield of the most developed and widely used three-blade, horizontal-axis turbines is resolved today by means of onshore or offshore installations occupying large expanses with wind farms having a given number of massive machines, in which each of them fails to utilize 60 or 65% of the space and energy existing between the blades, where, due to a laminar technical criterion of the wind, the turbines must be separated with spaces large enough to restore the turbulent wind to a natural dynamic laminar wind; therefore, there is a need to occupy large land and sea areas in order to achieve production goals. Moreover, there is a need to deduct a part of the energy produced by one of these turbines which is caused by power consumption loss in the substation, given the need to transform the high-voltage electricity generated; there is also a need to deduct the energy lost in electric transport and in transforming the voltage back to a suitable level for consumption by the end customer in cities, industries, etc.

The mentioned vertical-axis and horizontal-axis wind models also do not include machines which, while providing energy sufficiency or high output, are installed and included in urban or industrialized areas. Likewise, there is a need to point out in this assessment that the existence of large wind farms is creating unease in the rural areas of many countries given the absence of desire to live next to a wind farm, the value loss sustained by owners of lands and homes located in the vicinity of a wind farm, the visual pollution caused by these wind farms spanning many kilometers in any natural environment, as well as the disturbance of the natural habitat of flora and fauna.

Another problem lies in the technical part and the constructive level given the limitation of the longitudinal size of the blades as they are only supported at one end coupled to the shaft where, for blades of significant sizes and arranged facing strong winds rated C3, their the limited fatigue and resistance capacity will be put to test, an issue which makes it necessary to position the blades with a smaller angle of attack to prevent them from breaking, losing the opportunity to produce more electric power when the kinetic of the wind provides more energetic power.

Document US2010196157A1 is known from the patent literature and discloses a horizontal-axis wind turbine with a U-shaped support frame, including bearings for said horizontal shaft and a third central bearing in which said frame rotates about a vertical shaft. There are arranged in the horizontal shaft a plurality of axial blades, spaced longitudinally along said horizontal shaft and also spaced radially around said horizontal shaft, so that when the wind strikes thereon with a certain angle, it exerts on said blades a thrust which is capable of causing the horizontal shaft thereof to rotate. The effectiveness and functionality of this turbine are called into question because forces in the direction of incidence of the wind are produced in said frame and said forces, being lateral with respect to said frame, will undoubtedly contribute to the frame being destabilized towards the opposite side and to the bearings breaking or wearing away due to this lateral thrust.

Document US2010329841 discloses a horizontal-axis wind engine, formed by a rotating structure on a vertical axis, inside which a horizontal-axis cylindrical rotor is mounted and oriented perpendicularly to the direction of the wind, which is equipped with radial blades that emerge from the rotating axis and reach a point close to the periphery of said rotor. Said rotating structure having an enveloping casing for said cylindrical rotor, equipped with an inlet manifold that occupies a surface close to the upper half of the upwind face and an outlet manifold that occupies a surface close to the upper half of the downwind face, as well a series of ramps that channel the air towards the inside of the turbine.

Document US5009569 discloses a wind energy generator system incorporating a funnel that directs wind against a rotor causing it to rotate. Said rotor has a series of peripheral blades on which the wind hits.

### Description of the invention

Based on the prior art, an objective of the present invention is to provide a horizontal-axis wind-powered generator which, unlike the wind-powered generator mentioned above, has a shaft arranged clearly perpendicular to the wind path. This horizontal-axis wind-powered generator proposes an innovative operating principle which describes a square or rectangular shaped aerial occupation and is powered in the front portion with 85% of occupied surface in the front portion, which allows the front focal point of the turbine to be almost an entirely useful space in terms of energy, thereby optimizing the yield thereof per space occupied. The remaining 15% of said space is occupied by flaps or wind-diverting elements in charge of extracting or discharging the turbulent air in a controlled and directed manner in the rear part.

Another objective of the present invention relates to the development of a turbine which can be discretely integrated in urban areas for the purpose of producing electric power at points very close to the consumption points, where installations in urban or industrial areas are concerned, preventing significant power losses due to voltage transformations and to transport of the electricity produced.

To achieve the proposed objectives mentioned above, the invention proposes a horizontal-axis wind-powered generator having the features of claim 1.

A significant advantage of wind-powered generators of this type results from the constructive limitations existing for large machines, which are clearly smaller in this design, given that the rotor is supported at two end points of the shaft and the blades of the rotor are secured at two ends thereof, increasing the resistance thereof, preventing significant bending or flexion fatigues, such that it can withstand winds rated C3 or higher, and therefore fulfill the power demand from onshore or offshore production. Likewise, since this design is multi-scalable, it allows significant dimensions to be adopted in order to fulfill the objective of reducing the number of machines in a wind farm to one.

### Description of the drawings

As a complement to the description provided herein, and for the purpose of helping to make the features of the invention more readily understandable, the present specification is accompanied by a set of drawings which, by way of illustration and not limitation, represent the following:

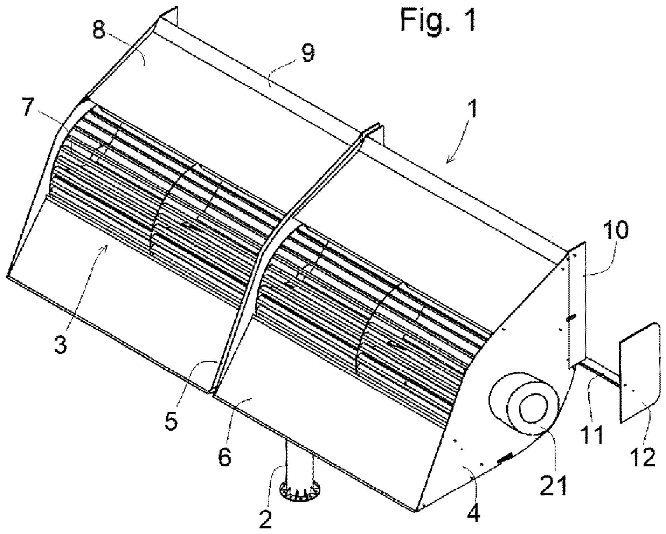

- Figure 1 shows a front perspective view of the wind-powered generator of the invention.

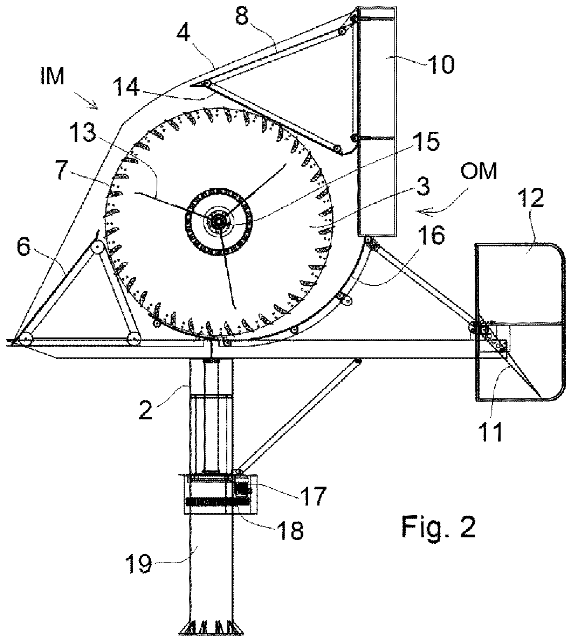

- Figure 2 depicts a cross-section of this wind-powered generator.

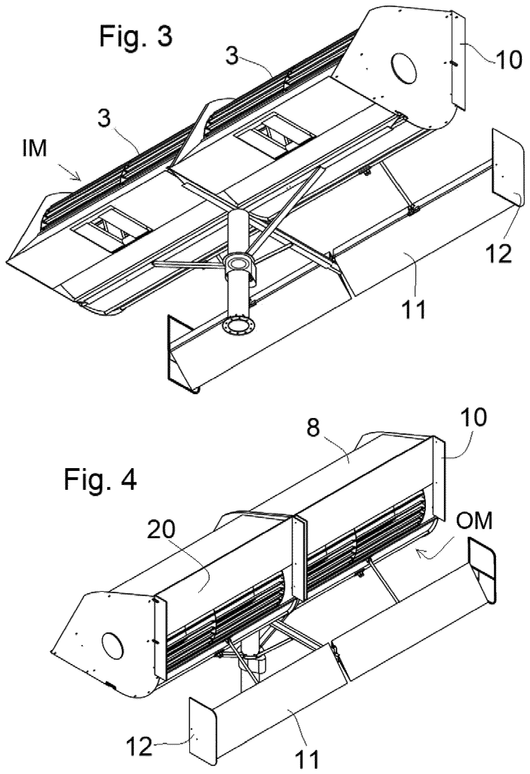

- Figures 3 and 4 show respective perspective views from a rear and lower angle, respectively.
- Figure 5 is a schematic view of the air currents circulating through the wind turbine (1).
- Figure 6 is a schematic section of one of the generatrix blades (7).

### Embodiment of the invention

As can be seen in the mentioned figures, the invention relates to a wind-powered generator which is formed by a structure (2) rotating about a vertical shaft (19), built into the ground, a building, or a vessel, which supports a horizontal-axis wind turbine (1) operated by the kinetic energy of the wind.

The wind turbine (1) depicted in the figures has two cylindrical horizontal-axis rotors (3) which, in an operative position, are located independently perpendicular to the direction of the wind as a result of a system consisting of wind wanes (10, 12) located in the rear area, which prolong and enhance, between them, the output effect of the discharge or outlet manifold (OM), maintaining the turbulent wind in a controlled direction, while at the same time increasing its output speed. Said wind wanes are also in charge of permanently directing and orienting the unit to the multiple directions of the wind, forcing the feed or inlet manifold (IM) of the turbine to be aimed towards the direction of the wind powering same at all times.

The cylindrical rotors (3) are unlimited in number, where there can be only one rotor, two rotors such as in the depicted example, or more rotors. In any case and according to an important feature of the invention, each of these cylindrical rotors (3) has:
- Radial blades (13), in number comprised between two and four (preferably three, such as in the depicted figures), which are uniformly distributed around the rotating shaft (15) and are flat plates running from the shaft (15) to a point close to the periphery of said rotor (3).
- A plurality of generatrix blades (7), all of them arranged forming the same angle with the tangent to said rotor at the point in which they are located; or in other words, forming the same angle (α) with respect to the radius (r) of the rotor (3) in which it is fixed.

All the radial blades (13) and generatrix blades (7), as well as the shaft (15) of the rotor, are secured at the ends thereof in respective covers forming the bases or sides of each of the rotors (3) forming the turbine (1), with all the blades of the equipment providing sufficient rigidity so that the rotor can be extremely long and strong.

In a preferred embodiment, the radial blades (13) have a slight bend towards the direction of incidence of the wind at the end.

In turn, the generatrix blades (7) have a flat operative face (71) and an arched back (72) which offer a smaller angle in the direction of incidence of the wind. The operative face (71) of all the generatrix blades (7) is elevated in the direction of the wind by an angle (α) comprised between 15° and 30° with respect to the radius (r) of the rotor (3) in which it is fixed.

When the turbine (1) comprises more than one rotor (3) (such as in the depicted example) they are positioned such that they are aligned with one another and share the same rotating shaft (15). As indicated, there rotors (3) are unlimited in number, but furthermore, their diameter measurement can also present sizes much larger than the longitudinal sizes of the shaft, sharing part of the constructive design or being similar to that of a waterwheel, this size would be justified in those installations for large power outputs in a single point.

The turbine (1) involves a sheath or an enveloping casing for at least said cylindrical rotor (3) comprising at least:
- a feed or inlet manifold (IM) occupying a surface close to the upper half of the windward face, which is laterally closed by means of respective side covers (4), and in the case that several rotors (3) are placed aligned with one another by means of intermediate covers (5); whereas in the upper and lower portions thereof it is demarcated by the ramps (6, 14) which contribute to accumulate and lead the inner pressure in the turbine (1).
- a discharge or outlet manifold (OM) occupying a surface close to the upper half of the leeward face, which is demarcated between the ramp (14) and the bottom (16) of said casing.
- a series of ramps (6, 14, 16) channeling air into the turbine (1), such that the force of the wind causes a first thrust at the inlet on the radial blade (13) located towards the area of the inlet manifold (IM) and a second output thrust on the generatrix blades (7) which are located towards the outlet manifold (OM), as explained in more detail in the following lines.

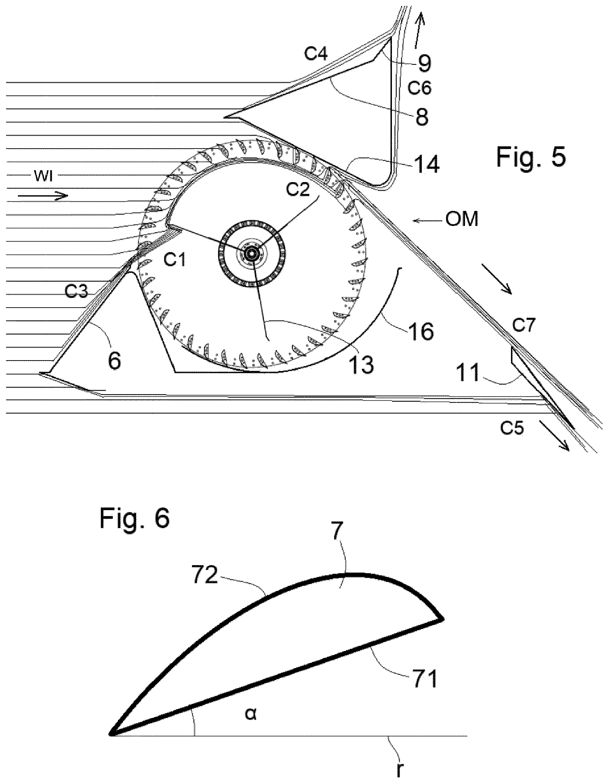

The first track or front ramp (6), linked in the inner faces of the side covers (4), is the first wind-capturing and -accelerating element which is part of the novel inlet manifold (IM). This ramp (6) amasses, accelerates, and concentrates the energy from wind striking the front portion thereof (C3) in order to project it into specific areas of the blades (7) of the rotor, so that they divert the incoming wind current (C1) towards the inner blades (13) of the turbine (1). (See Figure 5).

The second capturing ramp (14) runs from the inlet manifold (IM) to the outlet manifold (OM) with a certain inclination towards the rear part of the turbine such that it allows the wind to maintain its free laminar direction in the area of the inlet manifold and sustain a thrust over another accelerated gust of wind) having an angular path resulting from the projection of the ramp (6), forcing it to be projected towards the generatrix blades (7) of the rotor. Said ramp (14) is prolonged backwards to the outlet manifold (OM) and is located at the intermediate point very close to the rotor (3), in the area close to the upper point thereof, such that the air current (C2) going through the rotor (3) is forced to hit the active face (71) of the blades (7) located in the front area facing the outlet manifold (OM), while at the same time the rear prolongation thereof, which is part of the discharge or outlet manifold (OM), causes the output direction of the turbulent wind to be in an inclined plane (C7) inclining towards the rear/lower part of the turbine (1). (See Figure 5).

The wind-diverting ramp or flap (8) is also integral with the side covers (4) and is located in the upper part of the turbine, the function thereof being to direct a gust of non-turbulent headwind upwards, creating an aerial barrier prolonging the linear effect of said ramp or wind-diverting element (8), aerially providing a vacuum space in the rear upper area which causes the suction and acceleration of part of the turbulent wind, orients the output direction thereof in that part of the discharge manifold causing vortex effect as it exits upwardly through the rear cover (20); turbulent wind which is directed towards the vacuum aerial space created by said flap (8). The fact that this flap (8) has an end part (9) with a more pronounced slope contributes to achieving this effect.

The purpose of the side covers of the rotors (3) is to prevent wind from exiting through the sides, such that it must enter and exit the rotor only through the generatrix blades (7). Furthermore, these side covers also support in the vertex of their inner faces the blades (7) which receive a part of the wind energy and diverts it towards the inside of the rotor, projecting another part of the wind energy onto another equipment with blades (13) integral with the common shaft of the rotor equipment. By means of centrifugal action, these blades (13) divert the wind again against the generatrix blades (7) which will allow exit through the suitable vertex of the blades (7) from the upper point, leaving another part of the kinetic energy of the outgoing or turbulent wind therein.

The lower closure cover or curved sheath (16) of the rotor is located in the lower area of the turbine and has the function of maintaining the inner pressure of the rotor (3) when it rotates inside this casing as a result of the effect of the headwind driving same.

The rear face (20) of the casing of the turbine (1) includes respective parallel side wind wanes (10) which facilitate the rotation thereof so that the inlet manifold (IM) is located facing the wind at all times. Another purpose of these wind wanes (10) is to prolong and enhance, between them, the output effect of the outlet manifold (OM).

The turbine (1) also has in the rear/lower area wind direction wanes (12) assembled in a wind-diverting flap (11). The wind wanes (12) are parallel and perform their function upon receiving the thrust of the wind on their outer faces, such that they cause the rotation for directing the turbine assembly when they are located aligned with said assembly; at the same time, there is formed on the inner faces of the wind wanes a vacuum space with a lower pressure which causes a favorable effect for the suction of turbulent wind (C7) so as to prolong the output speed thereof.

In large machines, the action of directing these wind wanes (10, 12) can be assisted by an electric motor (17) which meshes with a pinion on a gear ring (18), said motor can be used for different operations for directing or protecting against gale-force winds.

The lower discharge or wind-diverting flap (11) assembled between the inner faces of the equipment with wind wanes (12) diverts the non-turbulent headwind passing below the turbine, hitting against the inclined plane of said flap, and counteracts the front thrust of the wind striking the unit, providing balance and maintaining the turbine in a horizontal position, preventing eccentric non-vertical loads in the directing articulation formed by the structure (2) and the shaft (19). The front face of this wind-diverting flap (11) directs a gust of wind, accelerating it downwards, creating a transverse aerial barrier prolonging the effect of said flap. The other face of the flap which forms an inner part of the outlet manifold of the turbine, integral with the inner faces of the wind wanes (12), increases the vacuum effect and the suction of the turbulent wind, directing it by technical principle, with an output angle and enhancing the discharge of the turbine.

As indicated, this wind-powered generator can be fixed built into the ground, or on a building, or a vessel, whether it is a house or an industrial construction, and on a terrace or roof. A vertical structure or post (19), which will function as a shaft, has been envisaged for fixing the wind-powered generator. Bearings or bushings supporting the weight of the mobile structure (2) and vertically centering the directional rotation of the turbine will be housed at unspecified points of the tube.

The mobile structure (2) supporting the turbine (1) is attached to and rotates freely in all directions about the bearings or bushings installed at the point where it is attached to the vertical post (19). As mentioned, said rotations can be assisted by a motor (17) which meshes with a gear ring (18).

This apparatus has at least one generator (21) the stator of which is assembled on the side casing (4), whereas the rotor is moved by the shaft (15) of the turbine (1). In a preferred embodiment, respective generators are assembled on both sides, in order to balance the weight of the equipment. In an alternative option, the magnetic part of the rotor is assembled in the side covers of the turbine (3), whereas the magnetic part of the stator is assembled in the inner side of the casing (4).

## Claims

1. A horizontal-axis wind-powered generator formed by a structure (2) rotating about a vertical shaft (19), built into the ground, a building, or a vessel, supporting a horizontal-axis wind turbine (1), **comprising:**
- at least one cylindrical horizontal-axis rotor (3) which, in an operative position, is located perpendicular to the direction of the wind, having:
∘ at least two radial blades (13) emerging from the rotating shaft (15) and reaching a point close to the periphery of said rotor (3), dividing the rotor (3) into equal sectors, and
- an enveloping casing for at least said cylindrical rotor (3) having:
∘ an inlet manifold (IM) occupying a surface close to the upper half of the windward face,
∘ an outlet manifold (OM) occupying a surface close to the upper half of the leeward face, and
∘ a series of ramps (6, 14, 16) channeling air into the turbine (1), such that, at the inlet, the force of the wind causes a first thrust on the radial blade (13) located towards the area of the inlet manifold (IM) and a second output thrust on the generatrix blades (7) which are located towards the outlet manifold (OM); and
- at least one wind vane (10, 12) which, with the structure (2) rotating about the shaft (19), automatically orient the turbine (1) such that the inlet manifold (IM) is located facing the direction of the wind (WI);
**characterized in that** the cylindrical rotor (3) comprises a plurality of generatrix blades (7) all of them arranged forming the same angle with the tangent to said rotor at the point in which the blades are located, and spaced from one another, having a flat operative face (71) and an arched back (72) which offers a smaller angle in the direction of incidence of the wind; both the radial blades (13) and generatrix blades (7), as well as the shaft (15) of the rotor all being secured at the ends thereof in respective covers forming the bases or sides of said rotor (3).

2. The wind-powered generator according to claim 1, **characterized in that** the operative face (71) of all the generatrix blades (7) is elevated in the direction of the wind by an angle (α) comprised between 15° and 30° with respect to the radius (r) of the rotor (3) in which it is fixed.

3. The wind-powered generator according to claim 1, **characterized in that** the casing of the wind turbine comprises:
- a front ramp (6) projecting from the lower portion thereof and reaches the inlet manifold (IM) where air enters the rotor, channeling the air (C3) striking this ramp by directing it against the active face of the generatrix blades (7) and these blades direct said air against the radial blade (13) which is located at that time in the area of the inlet manifold,which utilizes and concentrates the wind energy (C1), while projecting it at the same time towards the blades (7) of the rotor located before the outlet manifold (OM), which will also receive a favorable air current (C2) as the rotor rotates;
- a ramp (14) closing the upper portion thereof and connecting the area between the inlet manifold (IM) and the outlet manifold (OM), allowing the air current (C2) to keep circulating freely through the inside of the rotor (3) and to impact the blades (7) located in the front area facing the outlet manifold (OM), having the active face (71) thereof in a direction approximately perpendicular to the output current (C7).

4. The wind-powered generator according to any of the preceding claims, **characterized in that** the ramp (14) is inclined from top down in the direction of the wind going through the turbine (1), which causes the output direction of the turbulent wind to be in an inclined plane (C7) inclining towards the rear/lower part of the turbine (1), above a flap (11) having respective side wind wanes (12) which prolong and enhance, between them, the output effect of the outlet manifold (OM).

5. The wind-powered generator according to any of the preceding claims, **characterized in that** the casing of the wind turbine comprises a flap (8), located above the inlet manifold (IM) and inclined by way of an ascending ramp directing a gust of non-turbulent headwind (C4) upwards and creating an aerial barrier prolonging the linear effect of said ramp by enabling a vacuum in the rear upper area, which causes the suction and acceleration of part of the turbulent wind, orienting the output direction thereof **in that** part of the discharge manifold, during the exit thereof, in the ascending direction (C6), causing a vortex effect in the rear cover (20).

6. The wind-powered generator according to any of the preceding claims, **characterized in that** the casing of the wind turbine also comprises an arched shell (16) closing the rear lower area up to the lower part of the outlet manifold (OM), allowing the inner pressure of the rotor (3) to be maintained when it rotates inside this casing as a result of the effect of the headwind driving same.

7. The wind-powered generator according to any of the preceding claims, **characterized in that** it comprises, behind the outlet manifold and below the casing of the turbine (1), a flap (11) which diverts the non-turbulent headwind (C5) passing below the turbine, hitting against the inclined plane of said flap, accelerating it downwards and creating a transverse aerial barrier prolonging the effect of said flap; whereas the other face of the flap (11) works together, creating a vacuum effect and a suction of the turbulent wind exiting through the outlet manifold (OM).

8. The wind-powered generator according to any of the preceding claims, **characterized in that** the casing of the turbine (1) comprises respective parallel side wind wanes (10) in the rear area, which prolong and enhance, between them, the output effect of the outlet manifold (OM).

9. The wind-powered generator according to any of the preceding claims, **characterized in that** it comprises at least two rotors (3) aligned with one another and assembled in the same shaft.

10. The wind-powered generator according to any of the preceding claims, **characterized in that** the rotation between the support structure (2) of the turbine (1) and the vertical pole (19), about bearings or bushings, is assisted and controlled by a motor (17) which moves a gear ring (18).

11. The wind-powered generator according to any of the preceding claims, **characterized in that** there are three radial blades (13) having a flat surface and a slight bend towards the direction of incidence of the wind at the end.

## Patentansprüche

1. Windkraftgenerator mit horizontaler Achse, der aus einer Struktur (2) gebildet ist, die sich um eine vertikale Welle (19) dreht, die in den Boden, ein Gebäude oder ein Schiff gebaut ist, die eine Windturbine (1) mit horizontaler Achse trägt, **umfassend:**
- mindestens einen zylindrischen Rotor (3) mit horizontaler Achse, der sich in einer Betriebsposition senkrecht zur Windrichtung befindet, aufweisend:
o mindestens zwei radiale Schaufeln (13), die von der Drehwelle (15) ausgehen und einen Punkt nahe dem Umfang des Rotors (3) erreichen und den Rotor (3) in gleiche Sektoren unterteilen, und
- ein umhüllendes Gehäuse für mindestens den zylindrischen Rotor (3), aufweisend:
∘ einen Einlassverteiler (inlet manifold, IM), der eine Oberfläche nahe der oberen Hälfte der Luvseite einnimmt,
∘ einen Auslassverteiler (outlet manifold, OM), der eine Oberfläche nahe der oberen Hälfte der Leeseite einnimmt, und
∘ eine Reihe von Rampen (6, 14, 16), die Luft in die Turbine (1) kanalisieren, sodass die Windkraft am Einlass einen ersten Schub auf die radiale Schaufel (13), die sich im Bereich des Einlassverteilers (IM) befindet, und einen zweiten Ausgangsschub auf die Erzeugungsschaufeln (7) verursacht, die sich im Bereich des Auslassverteilers (OM) befinden; und
- mindestens eine Windfahne (10, 12), die bei einer Drehung der Struktur (2) um die Welle (19) die Turbine (1) automatisch so ausrichtet, dass der Einlassverteiler (IM) in die Richtung des Windes (WI) ausgerichtet wird;
**dadurch gekennzeichnet, dass** der zylindrische Rotor (3) eine Vielzahl von Erzeugungsschaufeln (7) umfasst, die alle so angeordnet sind, dass sie mit der Tangente an dem Punkt, an dem sich die Schaufeln befinden, den gleichen Winkel bilden und voneinander entfernt sind, wobei sie eine flache Betriebsfläche (71) und eine gewölbte Rückseite (72) aufweisen, die in der Einfallsrichtung des Windes einen kleineren Winkel bietet;
sowohl die radialen Schaufeln (13) und die Erzeugungsschaufeln (7) als auch die Welle (15) des Rotors alle an ihren Enden in entsprechenden Abdeckungen befestigt sind, die die Unterteile oder Seiten des Rotors (3) bilden.

2. Windkraftgenerator nach Anspruch 1, **dadurch gekennzeichnet, dass** die Betriebsflächen (71) aller Erzeugungsschaufeln (7) in der Richtung des Windes um einen Winkel (a) zwischen 15° und 30° in Bezug auf den Radius (r) des Rotors (3) erhöht ist, in dem sie befestigt sind.

3. Windkraftgenerator nach Anspruch 1, **dadurch gekennzeichnet, dass** das Gehäuse der Windturbine umfasst:
- eine vordere Rampe (6), die aus dem unteren Abschnitt des Rotors hervorsteht und bis zum Einlassverteiler (IM) reicht, bei dem Luft in den Rotor eintritt, der die auf diese Rampe auftreffende Luft (C3) kanalisiert, indem er sie gegen die aktive Fläche der Erzeugungsschaufeln (7) richtet, und diese Schaufeln die Luft gegen die radiale Schaufel (13) richten, die sich zu diesem Zeitpunkt im Bereich des Einlassverteilers befindet, die die Windenergie (C1) nutzt und konzentriert, während sie sie gleichzeitig auf die Schaufeln (7) des Rotors projiziert, die sich vor dem Auslassverteiler (OM) befinden, der ebenfalls einen günstigen Luftstrom (C2) empfängt, während sich der Rotor dreht;
- eine Rampe (14), die den oberen Abschnitt davon schließt und den Bereich zwischen dem Einlassverteiler (IM) und dem Auslassverteiler (OM) verbindet, sodass der Luftstrom (C2) weiterhin frei durch das Innere des Rotors (3) zirkulieren und auf die Schaufeln (7) einwirken kann, die sich in dem vorderen Bereich befinden, der dem Auslassverteiler (OM) zugewandt ist, der die aktive Fläche (71) davon in einer Richtung aufweist, die ungefähr senkrecht zum Ausgangsstrom (C7) ist.

4. Windkraftgenerator nach einem der vorhergehenden Ansprüche, **dadurch gekennzeichnet, dass** die Rampe (14) von oben nach unten in Richtung des Windes geneigt ist, der durch die Turbine (1) strömt, was dazu führt, dass die Ausgangsrichtung des turbulenten Windes in einer geneigten Ebene (07) liegt, die sich zum hinteren/unteren Teil der Turbine (1) oberhalb einer Klappe (11) hin neigt, die entsprechende Seitenwindfahnen (12) aufweist, die zwischen ihnen die Ausgangswirkung des Auslassverteilers (OM) verlängern und verstärken.

5. Windkraftgenerator nach einem der vorhergehenden Ansprüche, **dadurch gekennzeichnet, dass** das Gehäuse der Windturbine eine Klappe (8) umfasst, die sich oberhalb des Einlassverteilers (IM) befindet und mittels einer ansteigenden Rampe geneigt ist, die einen nicht turbulenten Gegenwindstoß (04) nach oben richtet und eine Luftbarriere erzeugt, die die lineare Wirkung der Rampe verlängert, indem sie einen Unterdruck im hinteren oberen Bereich ermöglicht, der das Ansaugung und die Beschleunigung eines Teils des turbulenten Windes bewirkt, indem er dessen Ausgangsrichtung in dem Teil des Abgabeverteilers bei dessen Austritt in die aufsteigende Richtung (C6) ausrichtet, wodurch ein Wirbeleffekt in der hinteren Abdeckung (20) verursacht wird.

6. Windkraftgenerator nach einem der vorhergehenden Ansprüche, **dadurch gekennzeichnet, dass** das Gehäuse der Windturbine außerdem eine gewölbte Hülle (16) umfasst, die den hinteren unteren Bereich bis zum unteren Teil des Auslassverteilers (OM) schließt, wodurch das Aufrechterhalten des Innendrucks des Rotors (3) ermöglicht wird, wenn er sich in diesem Gehäuse aufgrund der Wirkung des ihn antreibenden Gegenwinds dreht.

7. Windkraftgenerator nach einem der vorhergehenden Ansprüche, **dadurch gekennzeichnet, dass** er hinter dem Auslassverteiler und unterhalb des Gehäuses der Turbine (1) eine Klappe (11) umfasst, die den nichtturbulenten Gegenwind (C5) ablenkt, der unterhalb der Turbine vorbeiströmt, indem er auf die geneigte Ebene der Klappe auftrifft, wodurch er nach unten beschleunigt und eine quer verlaufende Luftbarriere erzeugt, die die Wirkung der Klappe verlängert; während die andere Fläche der Klappe (11) mitwirkt und eine Unterdruckwirkung und einen Sog des turbulenten Windes erzeugt, der durch den Auslassverteiler (OM) austritt.

8. Windkraftgenerator nach einem der vorhergehenden Ansprüche, **dadurch gekennzeichnet, dass** das Gehäuse der Turbine (1) im hinteren Bereich jeweilige parallele Seitenwindfahnen (10) umfasst, die zwischen sich die Ausgangswirkung des Auslassverteilers (OM) verlängern und verstärken.

9. Windkraftgenerator nach einem der vorhergehenden Ansprüche, **dadurch gekennzeichnet, dass** er mindestens zwei Rotoren (3) umfasst, die zueinander ausgerichtet und auf derselben Welle montiert sind.

10. Windkraftgenerator nach einem der vorhergehenden Ansprüche, **dadurch gekennzeichnet, dass** die Drehung zwischen der Tragstruktur (2) der Turbine (1) und dem vertikalen Pol (19) um Lager oder Buchsen durch einen Motor (17) unterstützt und gesteuert wird, der einen Zahnkranz (18) bewegt.

11. Windkraftgenerator nach einem der vorhergehenden Ansprüche, **dadurch gekennzeichnet, dass** drei radiale Schaufeln (13) vorhanden sind, die eine flache Oberfläche und am Ende eine leichte Biegung in Richtung der Einfallsrichtung des Windes aufweisen.

## Revendications

1. Générateur éolien à axe horizontal constitué d'une structure (2) tournant autour d'un arbre vertical (19), encastré dans le sol, un bâtiment ou un navire, supportant une éolienne à axe horizontal (1), **comprenant** :
- au moins un rotor cylindrique à axe horizontal (3) qui, en position de fonctionnement, est situé perpendiculairement à la direction du vent, ayant :
∘ au moins deux pales radiales (13) émergeant de l'arbre rotatif (15) et atteignant un point proche de la périphérie dudit rotor (3), divisant le rotor (3) en secteurs égaux, et
- un boîtier enveloppant au moins ledit rotor cylindrique (3) ayant :
∘ un collecteur d'entrée (IM) occupant une surface proche de la moitié supérieure de la face au vent,
∘ un collecteur de sortie (OM) occupant une surface proche de la moitié supérieure de la face sous le vent, et
∘ une série de rampes (6, 14, 16) canalisant l'air dans la turbine (1), de sorte que, au niveau de l'entrée, la force du vent provoque une première poussée sur la pale radiale (13) située vers la zone du collecteur d'entrée (IM) et une seconde poussée de sortie sur les pales de génératrice (7) qui sont situées vers le collecteur de sortie (OM) ; et
- au moins une girouette (10, 12) qui, avec la structure (2) tournant autour de l'arbre (19), oriente automatiquement la turbine (1) de sorte que le collecteur d'entrée (IM) soit situé face à la direction du vent (WI) ;
**caractérisé en ce que** le rotor cylindrique (3) comprend une pluralité de pales de génératrice (7) toutes agencées de manière à former le même angle avec la tangente audit rotor au point où les pales sont situées, et espacées les unes des autres, ayant une face de fonctionnement plane (71) et un dos arqué (72) qui offre un angle plus petit dans la direction d'incidence du vent ;
les deux pales radiales (13) et les pales de génératrice (7), ainsi que l'arbre (15) du rotor, étant tous fixés à leurs extrémités dans des couvercles respectifs formant les bases ou les côtés dudit rotor (3).

2. Générateur éolien selon la revendication 1, **caractérisé en ce que** la face de fonctionnement (71) de toutes les pales de génératrice (7) est élevée dans la direction du vent d'un angle (a) compris entre 15° et 30° par rapport au rayon (r) du rotor (3) dans lequel elle est maintenue.

3. Générateur éolien selon la revendication 1, **caractérisé en ce que** le boîtier de l'éolienne comprend :
- une rampe avant (6) faisant saillie dans sa partie inférieure et atteignant le collecteur d'entrée (IM) où l'air pénètre dans le rotor, canalisant l'air (C3) qui arrive sur cette rampe en le dirigeant contre la face active des pales de génératrice (7) et ces pales dirigent ledit air contre la pale radiale (13) qui est située à ce moment-là dans la zone du collecteur d'entrée, qui utilise et concentre l'énergie du vent (C1), tout en le projetant en même temps vers les pales (7) du rotor situées devant le collecteur de sortie (OM), qui recevront également un courant d'air favorable (C2) lors de la rotation du rotor ;
- une rampe (14) fermant sa partie supérieure et reliant la zone située entre le collecteur d'entrée (IM) et le collecteur de sortie (OM), permettant au courant d'air (C2) de continuer à circuler librement à l'intérieur du rotor (3) et de frapper les pales (7) situées dans la zone avant en face du collecteur de sortie (OM), dont la face active (71) est orientée dans une direction approximativement perpendiculaire au courant de sortie (C7).

4. Générateur éolien selon l'une quelconque des revendications précédentes, **caractérisé en ce que** la rampe (14) est inclinée du haut vers le bas dans la direction du vent traversant la turbine (1), ce qui provoque l'inclinaison de la direction de sortie du vent turbulent dans un plan (07) vers la partie arrière/inférieure de la turbine (1), au-dessus d'un rabat (11) ayant des girouettes latérales respectives (12) qui se prolongent et renforcent, entre elles, l'effet de sortie du collecteur de sortie (OM).

5. Générateur éolien selon l'une quelconque des revendications précédentes, **caractérisé en ce que** le boîtier de l'éolienne comprend un rabat (8), situé au-dessus du collecteur d'entrée (IM) et incliné au moyen d'une rampe ascendante dirigeant une rafale de vent contraire non turbulent (04) vers le haut et créant une barrière aérienne prolongeant l'effet linéaire de ladite rampe en assurant une dépression dans la zone supérieure arrière, qui provoque l'aspiration et l'accélération d'une partie du vent turbulent, en orientant sa direction de sortie dans cette partie du collecteur de décharge, au cours de la sortie de celui-ci, dans la direction ascendante (C6), provoquant un effet de vortex dans le couvercle arrière (20).

6. Générateur éolien selon l'une quelconque des revendications précédentes, **caractérisé en ce que** le boîtier de l'éolienne comprend également une coque arquée (16) fermant la zone inférieure arrière jusqu'à la partie inférieure du collecteur de sortie (OM), permettant de maintenir la pression intérieure du rotor (3) lorsqu'il tourne à l'intérieur de ce boîtier sous l'effet du vent contraire qui l'entraîne.

7. Générateur éolien selon l'une quelconque des revendications précédentes, **caractérisé en ce qu'**il comprend, derrière le collecteur de sortie et sous le boîtier de la turbine (1), un rabat (11) qui dévie le vent contraire non turbulent (C5) passant sous la turbine, frappant le plan incliné dudit rabat, en le faisant accélérer vers le bas et en créant une barrière aérienne transversale prolongeant l'effet dudit rabat ; tandis que l'autre face du rabat (11) travaille avec, créant un effet de dépression et une aspiration du vent turbulent sortant par le collecteur de sortie (OM).

8. Générateur éolien selon l'une quelconque des revendications précédentes, **caractérisé en ce que** le boîtier de l'éolienne (1) comprend des girouettes latérales parallèles respectives (10) dans la zone arrière, qui se prolongent et améliorent, entre elles, l'effet de sortie du collecteur de sortie (OM).

9. Générateur éolien selon l'une quelconque des revendications précédentes, **caractérisé en ce qu'**il comprend au moins deux rotors (3) alignés l'un sur l'autre et assemblés dans le même arbre.

10. Générateur éolien selon l'une quelconque des revendications précédentes, **caractérisé en ce que** la rotation entre la structure de support (2) de la turbine (1) et le poteau vertical (19), autour des roulements ou des coussinets, est assisté et contrôlé par un moteur (17) qui déplace une couronne dentée (18).

11. Générateur éolien selon l'une quelconque des revendications précédentes, **caractérisé en ce qu'**il y a trois pales radiales (13) ayant une surface plane et une légère courbure vers la direction d'incidence du vent à l'extrémité.
